Europäisches Patentamt

European Patent Office

Office européen des brevets

(19)

(11)  **EP 1 019 747 B1**

(12)  **FASCICULE DE BREVET EUROPEEN**

(45) Date de publication et mention
de la délivrance du brevet:
**22.05.2002  Bulletin 2002/21**

(21) Numéro de dépôt: **98947609.8**

(22) Date de dépôt: **06.10.1998**

(51) Int Cl.⁷: **G01S 15/89**

(86) Numéro de dépôt international:
**PCT/FR98/02130**

(87) Numéro de publication internationale:
**WO 99/18452 (15.04.1999 Gazette 1999/15)**

(54) **PROCEDE DE CORRECTION DES EFFETS DES MOUVEMENTS PARASITES DE L'ANTENNE DANS UN SONAR A ANTENNE SYNTHETIQUE**

**VERFAHREN ZUR KORREKTUR VON DURCH ANTENNENSCHWANKUNGEN HERVORGERUFENEN STÖREFFEKTEN FÜR EIN SONARGERÄT MIT SYNTHETISCHER ANTENNE**

**METHOD FOR CORRECTING EFFECTS OF AN ANTENNA INTERFERING MOVEMENTS IN A SONAR WITH SYNTHETIC ANTENNA**

(84) Etats contractants désignés:
**DE GB IT**

(30) Priorité:  **07.10.1997  FR 9712483**

(43) Date de publication de la demande:
**19.07.2000  Bulletin 2000/29**

(73) Titulaire: **Thales Underwater Systems SAS
06903 Sophia Antipolis (FR)**

(72) Inventeur: **BILLON, Didier,
Thomson-CSF Prop. Intellectuelle
F-94117 Arcueil Cedex (FR)**

(74) Mandataire: **Desperrier, Jean-Louis et al
Thales Intellectual Property
13, Avenue du Président
Salvador Allende
F-94117 Arcueil Cedex (FR)**

(56) Documents cités:
EP-A- 0 282 265          WO-A-96/03662
US-A- 4 183 024          US-A- 4 244 036
US-A- 4 400 803          US-A- 4 939 700

• OLLIVIER F ET AL: "SIDE SCAN SONAR USING PHASED ARRAYS FOR HIGH RESOLUTION IMAGING ANDWIDE SWATH BATHYMETRY" IEE PROCEEDINGS: RADAR, SONAR & NAVIGATION, vol. 143, no. 3, 1 juin 1996, pages 163-168, XP000590753
• DOUGLAS B L ET AL: "SYNTHETIC-APERTURE SONAR IMAGING WITH A MULTIPLE-ELEMENT RECEIVER ARRAY" IMAGE AND MULTIDIMENSIONAL SIGNAL PROCESSING, MINNEAPOLIS, APR. 27 - 30, 1993, vol. VOL. 5, no. -, 27 avril 1993, pages 445-448, XP000437705 INSTITUTE OF ELECTRICAL AND ELECTRONICS ENGINEERS

**Description**

La présente invention se rapporte aux procédés qui permettent de corriger les effets des mouvements parasites de l'antenne dans un sonar à antenne synthétique, lorsque la trajectoire de l'antenne physique de celui-ci n'est pas une droite parfaite.

On sait que dans un sonar la résolution est liée aux dimensions de l'antenne par rapport à la longueur d'onde utilisée. Ceci permet dans le cas d'un sonar latéral destiné à effectuer une imagerie du fond de la mer, dans lequel l'antenne située sur les flancs du bâtiment porteur se déplace sensiblement le long d'une droite parallèle à la trajectoire du bâtiment et perpendiculaire à la direction d'observation du sonar, d'utiliser un système dit d'antenne synthétique dans lequel on utilise les signaux reçus par l'antenne à des instants, et donc à des emplacements successifs pour obtenir une résolution sensiblement équivalente à celle d'une antenne virtuelle correspondant à la longueur parcourue par l'antenne physique pendant ces différents instants successifs.

Pour former les différentes voies d'un tel sonar, on additionne les signaux reçus en utilisant des retards correspondant à la direction de la voie formée et aux différents emplacements des capteurs de l'antenne en fonction de leur position sur l'antenne physique et du mouvement de celle-ci.

Dans le cas simple où ce mouvement est parfaitement linéaire et constant, ces retards sont connus. Dans la réalité le bâtiment porteur bouge beaucoup et d'une manière très aléatoire. On ne connaît donc pas de manière précise la position des capteurs lors des mesures.

La résolution $\delta y$ des sonars latéraux d'imagerie du fond conventionnels (non synthétiques) sur l'axe longitudinal parallèle à la route est limitée par la longueur L de leur antenne physique de réception. Elle est donné par la formule:

$$\delta y = \frac{\lambda}{L} \cdot R \qquad (1)$$

où $\lambda$ est la longueur d'onde et R la portée du sonar.

La résolution correspondante d'un sonar synthétique dont l'antenne synthétique est formée à partir de N récurrences successives est donnée par la formule :

$$\delta y = \frac{\lambda}{2.(N-1).V.T_r + L} \cdot R \qquad (2)$$

où V est la vitesse longitudinale moyenne pendant les N récurrences et $T_r$ la durée d'une récurrence.

La principale difficulté de l'application du principe de l'antenne synthétique au sonar réside dans la détermination des retards de formation des voies. Alors que ces retards ne dépendent que de la distance et de la direction du point visé pour une antenne conventionnelle, ceux d'une antenne synthétique dépendent du mouvement du porteur pendant sa durée de formation. Déterminer les retards est d'autant plus difficile que cette durée de formation, c'est à dire le nombre de récurrences N, est grand, ce qui va de pair avec la recherche d'une meilleure résolution .

Pour déterminer les retards de formation des voies de l'antenne synthétique, on peut chercher à mesurer le mouvement de l'antenne physique. La meilleure précision sur cette mesure est atteinte au moyen d'une centrale inertielle. On sait cependant d'un article de L.J. Cutrona « Comparison of sonar system performance achievable using synthetic-aperture sonar techniques with the performance achievable by more conventional means » - Journal of Acoustical Society of America, Vol. 58, N° 2, August 1975, que l'on est alors confronté à un problème de précision de la mesure d'accélération.

Le biais $\varepsilon_\gamma$ sur l'axe de visée doit satisfaire la relation suivante :

$$\varepsilon_\gamma < 8. \frac{\delta y^2 \cdot V^2}{R^2 \cdot \lambda} \qquad (3)$$

On doit alors avoir $\varepsilon_\gamma < 2.10^{-4} m/s^2$ pour obtenir par exemple une résolution de 5 cm à une portée de 350 m et à la vitesse de 8 noeuds avec un sonar dont la fréquence serait voisine de 100 kHz. Une telle valeur est compatible avec la précision intrinsèque des meilleurs accéléromètres, mais pas avec une mesure sur un mobile dont l'orientation dans le champ de gravité terrestre est inconnue. Pour l'obtenir dans ce cas, il faudrait pouvoir mesurer la direction de la verticale à mieux que $2.10^{-5}$ rd, ce qui est une précision irréaliste à obtenir dans un tel système de sonar embarqué.

Pour résoudre cette difficulté on a proposé diverses méthodes dites d'autofocalisation parce que l'on détermine les coefficients à partir des mesures du signal. Parmi celles-ci on connaît en particulier des méthodes exploitant l'intercorrélation du champ acoustique sur l'antenne sur deux récurrences successives. Quand le déplacement longitudinal entre deux récurrences est plus petit que la moitié de la longueur de l'antenne de réception, le champ à l'extrémité avant de la première récurrence est fortement corrélé avec le champ à l'extrémité arrière. La longueur $L_c$ des deux extrémités corrélées du champ de l'antenne est alors donnée par la formule :

$$L_c = L - 2 . V . T_r. \tag{4}$$

On exploite cette corrélation pour estimer le déplacement longitudinal l, la différence $\tau$ des temps de propagation aller et retour de l'impulsion sonar pour un même point de réflexion sur le fond, et la rotation $\beta$ de la direction de visée, entre les deux récurrences. Un exemple d'une telle méthode est décrit dans le brevet américain US-A-4 244 036 (Raven).

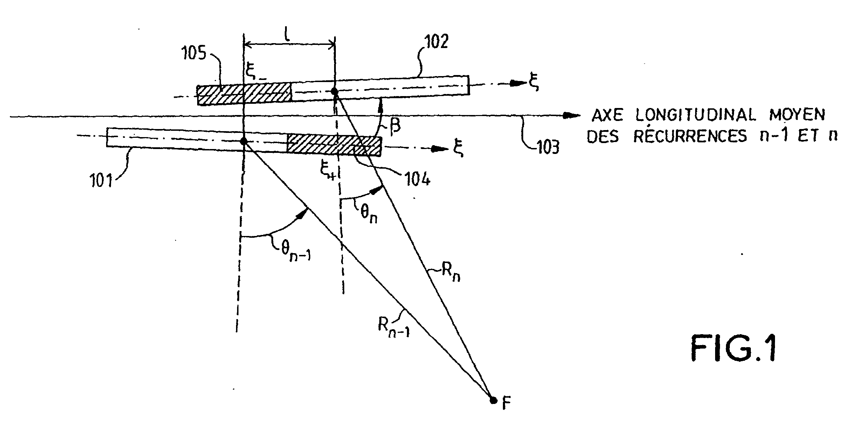

La figure 1 permet de définir les notations des paramètres utilisés. On y a représenté deux positions successives 101 et 102 de l'antenne physique correspondant à deux récurrences n-1 et n. L'axe 103 est la direction longitudinale moyenne, c'est à dire la direction parallèle à l'antenne, pour les 2 récurrences. Elle n'est en général pas identique à la direction de déplacement du bâtiment, à cause de la dérive.

La différence des temps de propagation $\tau$ étant relative à deux points de réception situés au centre des deux extrémités corrélées 104 et 105, les erreurs d'estimation des trois paramètres sont indépendantes. Les trois paramètres $l_n$, $\tau_n$ et $\beta_n$ étant estimés à partir des récurrences n-1 et n, et $\theta_n$ étant la direction de visée au centre de l'antenne de réception de l'antenne physique à la récurrence n (position 102) pour un point fixé à la distance R, on obtient le retard de formation de voie $\tau_{S,n}(\xi)$ de l'antenne synthétique pour le signal reçu à la récurrence n en un point d'abscisse $\xi$ dans le repère de l'antenne physique, au moyen des relations de récurrence :

$$\theta_n = \theta_{n-1} - \beta_n - \frac{l_n}{R} \tag{5}$$

$$\tau_{S,n}(\xi) = \tau_{S,n-1}(\xi_+) + \tau_n - \tau_{P,n}(\xi_-) + \tau_{P,n}(\xi) \tag{6}$$

où $\tau_{P,n}(\xi)$ est le retard de formation de voie de l'antenne physique au point d'abscisse $\xi$ et où $\xi_-$ et $\xi_+$ peuvent dépendre de n, car, la vitesse n'étant généralement pas constante, la longueur des deux extrémités corrélées peut varier.

La direction de consigne d'une voie est définie dans le repère de l'antenne physique à une récurrence donnée, par exemple la récurrence centrale de l'antenne synthétique. Pour cette récurrence de référence, les retards de formation de voie de l'antenne synthétique sont ceux de l'antenne physique. Au moyen des relations récursives précédentes, on estime alors de proche en proche, les retards de formation de voie de toutes les autres récurrences sonar qui sont utilisées pour constituer l'antenne synthétique. L'impact de l'erreur d'estimation de 1 est en général négligeable par rapport à ceux des erreurs d'estimations des deux autres paramètres. Chaque nouvelle insertion des relations récursives d'estimation engendre une erreur sur les retards de formation de voie, qui s'ajoute à celles des itérations précédentes. Ainsi l'erreur d'estimation du retard de formation de voie au point d'abscisse $\xi_-$ au bout d'un nombre donné d'itérations est la somme d'autant d'erreurs indépendantes, chacune étant elle-même la somme de deux composantes indépendantes :

- 　l'erreur d'estimation de $\tau_n$,
- 　l'erreur d'estimation de $\tau_{P,n}(\xi_-) - \tau_{P,n}(\xi_+)$ provoquée par l'erreur sur $\beta_n$.

En appelant $\phi_\tau$ et $\phi_\beta$ les écarts-types des erreurs de phase correspondantes, celles-ci sont obtenues à l'aide des expressions approchées suivantes :

$$\phi\tau = \sqrt{\frac{1}{K}\left(\frac{1}{\rho} - \frac{1}{2\rho^2}\right)} \tag{8}$$

$$\phi_\beta = \frac{2VT_r}{L_c} \sqrt{12\left(\frac{1}{\rho} - \frac{1}{2\rho^2}\right)} \qquad (9)$$

où K est le nombre d'échantillons indépendants des signaux de l'antenne d'une même récurrence intervenant dans l'autofocalisation et $\rho$ est égal à $\mu/(1-\mu)$, $\mu$ étant le coefficient d'intercorrélation.

Comme en pratique on cherche à maximiser la vitesse de déplacement du bâtiment porteur, la longueur des extrémités corrélées $L_c$ doit être aussi petite que possible et le déplacement inter-récurrences $VT_r$ peu inférieur à la valeur limite supérieure L/2 imposée par la contrainte d'échantillonnage spatial de l'antenne synthétique. Dans ces conditions, il résulte des expressions de $\phi_\tau$ et $\phi_\beta$ que c'est l'erreur d'estimation sur la rotation qui est de beaucoup la plus critique.

L'impact de cette erreur sur le gain de directivité g de la voie formée avec ces retards estimés est donné par la relation :

$$E(g^2) \approx 1 - \frac{N^2 - 1}{N} \cdot \frac{\phi^2}{6} \qquad (10)$$

où $\phi^2 = \phi_\tau^2 + \phi_\beta^2$

En se reportant à l'exemple pratique décrit plus haut, la longueur de l'antenne physique doit être de 4 m environ et le nombre de récurrences constituant l'antenne synthétique voisin de 30. Pour que la perte de gain de directivité soit inférieure à la valeur couramment recherchée de 1 dB, il faut que $\phi$ soit inférieur à 0,2 rd. Si on néglige $\phi_\tau$, la relation entre $\phi$ et l'erreur $\sigma$ de mesure de la rotation est donnée par la formule :

$$\phi = 2\pi\sigma . \frac{L-L_c}{\lambda} \qquad (11)$$

Pour une portée de 350 m, la durée $T_r$ de la récurrence est de 470 ms. La relation (4) donne alors $l_c = 0,3$ m pour L = 4m et V = 8 noeuds. Donc, dans l'exemple décrit, l'écart type de l'estimation de la rotation, faite à partir des signaux de l'antenne aux deux extrémités de longueur $L_c$, doit être inférieure à $10^{-4}$rd.

La résolution angulaire $\lambda/L_c$ de chaque extrémité vaut $5.10^{-2}$rd, soit 500 fois la précision requise sur l'estimation de la rotation. Il est donc irréaliste d'espérer atteindre une telle précision par estimation à partir des signaux de l'antenne.

Pour surmonter ces difficultés, l'invention propose un procédé de correction des effets des mouvements parasites de l'antenne dans un sonar à antenne synthétique, dans lequel on forme une antenne synthétique sur N récurrences du sonar et on corrige les variations du mouvement de l'antenne physique en effectuant une autofocalisation par intercorrélation des récurrences successives, essentiellement caractérisé en ce que pour corriger ces variations on utilise en outre la mesure des rotations de l'antenne obtenue avec au moins un gyromètre, et que l'on mesure l'angle de site du signal de réception avec une antenne auxiliaire perpendiculaire à ladite antenne physique pour augmenter la précision de mesure de la dite rotation à partir des mesures du gyromètre.

Selon une autre caractéristique, l'antenne physique est portée par un véhicule sous-marin dont la coque est de section sensiblement circulaire et l'antenne auxiliaire est courbe pour être conforme à cette coque.

Selon une autre caractéristique, l'antenne auxiliaire est réduite à deux transducteurs extrêmes et un transducteur intermédiaire.

Selon une autre caractéristique, le transducteur intermédiaire est l'un des transducteurs de l'antenne physique.

Selon une autre caractéristique, le sonar est du type à antenne synthétique interférométrique utilisant deux antennes physiques superposées et l'on utilise les signaux reçus par ces deux antennes physiques pour mesurer l'angle de site.

D'autres particularités et avantages de l'invention apparaîtront clairement dans la description suivante, présentée à titre d'exemple non limitatif en regard des figures annexées qui représentent :

- la figure 1, une vue schématique d'une antenne physique dans deux positions correspondant à deux récurrences successives ;

- la figure 2, une vue en perspective d'un véhicule sous-marin muni d'un sonar selon l'invention; et
- la figure 3, une vue schématique des antennes d'un tel sonar selon une variante de réalisation.

L'invention propose donc de mesurer les rotations de l'antenne au moyen de gyromètres. L'ordre de grandeur de la précision de mesure de vitesse de rotation recherchée est donné de manière approchée par le rapport entre la valeur désirée pour σ et la durée de la récurrence. Dans l'exemple décrit, ce rapport vaut $2.10^{-4}$ rd/s. Cette valeur excède manifestement de plusieurs ordres de grandeur la précision des gyromètres existants intégrés dans des centrales inertielles disponibles commercialement et convenant par leur coût et leur encombrement à une telle application.

Toutefois la mesure est effectuée par rapport à un repère lié à la plateforme, alors qu'on n'a besoin que de la valeur de la rotation dans le plan de visée déterminé par la position moyenne de l'antenne aux deux instants de réception et le point visé.

L'invention propose donc pour obtenir la précision souhaitée d'associer à l'antenne principale une antenne réseau auxiliaire verticale, de préférence utilisée uniquement en réception avec une émission commune aux deux antennes, afin de mesurer l'inclinaison en site du plan de visée, et de projeter sur ce plan la mesure de rotation obtenue par les gyromètres, les paramètres l et τ étant estimés par autofocalisation comme précédemment.

En appelant α la composante du vecteur de rotation perpendiculaire à l'antenne et parallèle au plan de visée, qui correspond sensiblement au tangage en limite de portée quant le faisceau rase le fond de la mer, $\varepsilon_\psi$ l'erreur de mesure de l'angle de site et $\varepsilon_\theta$ l'erreur sur la rotation de l'antenne dans le plan de visée induite par l'erreur de mesure du site, on obtient la relation suivante :

$$\varepsilon\theta = \alpha \cdot \varepsilon_\psi. \tag{12}$$

Pour une valeur de α = 1° par exemple, la précision recherchée sur θ dans l'exemple décrit nécessite une précision sur la valeur de ψ de l'ordre de 6 mrd. On sait que l'on peut obtenir facilement une précision sur l'angle de réception au moins 10 fois supérieure à la résolution angulaire procurée par l'antenne en utilisant des traitements connus d'écartométrie.

Pour obtenir la précision requise dans l'exemple décrit, on est donc amené à utiliser une antenne auxiliaire dont l'extension verticale est de l'ordre de 20 longueurs d'onde, soit 30 cm dans cet exemple. Une telle dimension ne pose pas de problème d'implantation important sur les plates-formes utilisées couramment pour porter ce type de sonar.

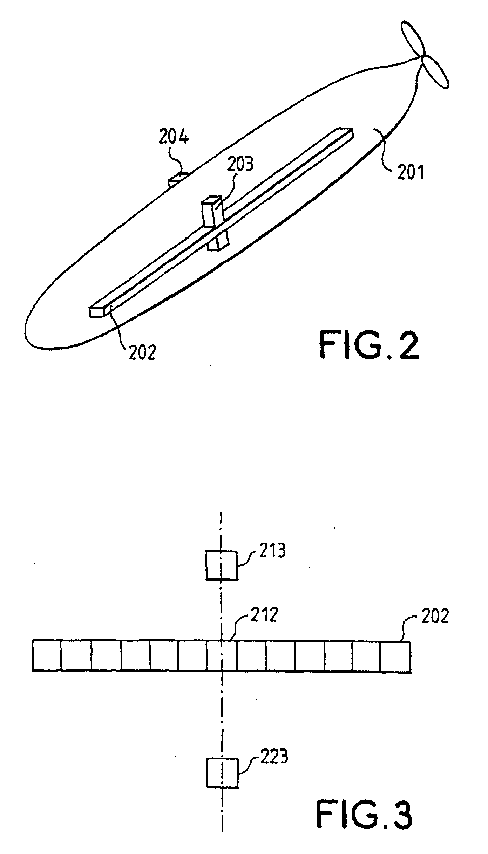

On a représenté sur la figure 2 un exemple de réalisation d'un sonar selon l'invention porté par un véhicule sous-marin pouvant être soit télécommandé soit dirigé par un autodirecteur. Il comprend de manière interne au moins un gyromètre permettant de mesurer sa rotation dans le plan horizontal. De préférence ce gyromètre fera partie d'une centrale inertielle.

Ce véhicule comprend sur son corps 201 des antennes longitudinales latérales dont on ne voit sur la figure que l'antenne bâbord 202, l'antenne tribord étant situé sur la face non visible sur la figure. Ces antennes latérales sont du type courant pour les sonars à antenne synthétique. Selon l'invention, on a rajouté sur ces côtés bâbord et tribord du corps 201 deux antennes verticales auxiliaires 203 et 204 qui permettent de mesurer l'angle de site du signal rétrodiffusé par le fond. Sur cet exemple de réalisation, ces antennes sont linéaires, mais elles pourraient être courbées pour s'adapter à la coque cylindrique 201. Ces antennes verticales sont formées d'un empilement de capteurs dont la largeur, qui détermine l'ouverture en gisement du lobe de réception de l'antenne, est de préférence telle que cette ouverture soit sensiblement égale à l'ouverture en gisement à l'émission du sonar latéral.

Dans l'exemple de réalisation décrit, cette ouverture est de l'ordre de 10°, ce qui correspond à une largeur des capteurs de l'ordre de 8cm, pour une fréquence émise de 100 kHz.

La hauteur totale de l'antenne verticale étant alors nettement plus élevée que la hauteur des capteurs individuels de l'antenne horizontale 202, le rapport signal/bruit en sortie de voie sur cette antenne verticale est alors nettement plus élevé que celui obtenu sur l'antenne horizontale (grace au gain de l'antenne).

Dans la pratique, on utilise pour cette antenne horizontale des capteurs dont la hauteur est sensiblement égale à la longueur d'onde utilisée, pour pouvoir couvrir un secteur suffisamment large en site.

Dans ces conditions, la hauteur des capteurs de l'antenne verticale est sensiblement identique à celle des capteurs de l'antenne horizontale, puisqu'il est nécessaire de couvrir le même secteur. On utilise alors une vingtaine de capteurs pour constituer cette antenne verticale. De ce fait, le rapport signal/bruit de l'antenne verticale en sortie de voie est supérieur d'environ 13 décibels au même rapport signal/bruit pour l'antenne horizontale.

On peut considérer que ce résultat est tout à fait surabondant. L'invention propose donc un deuxième mode de réalisation, représenté schématiquement en figure 3, dans lequel on simplifie de manière drastique le matériel utilisé tout en conservant des performances parfaitement satisfaisantes.

Pour cela, on réalise l'antenne verticale auxiliaire en utilisant uniquement trois capteurs 212, 213 et 223. Les capteurs 213 et 223 sont en fait les capteurs extrêmes qui aurait été utilisés dans une antenne du type de l'antenne 203 de la figure 2, et le capteur 212 est le capteur central de l'antenne 202, qui est utilisé aussi bien dans cette antenne 202 que dans l'antenne auxiliaire verticale. Le matériel supplémentaire nécessaire à l'invention est donc réduit aux deux capteurs 213 et 223.

L'antenne ainsi obtenue est lacunaire et s'apparente plutôt à un simple goniomètre. On sait alors que dans une telle antenne on obtient des ambiguïtés angulaires qu'il est nécessaire de lever.

Pour cela, on placera avantageusement les deux capteurs 213 et 223 à des distances légèrement différentes par rapport au capteur central ce qui permet d'obtenir cette levée d'ambiguïté de manière connue. Une telle antenne auxiliaire simplifiée conserve quand même un gain en rapport signal/bruit par rapport à celui de l'antenne horizontale de 5 décibels, ce qui est encore tout à fait satisfaisant.

L'invention s'étend également au cas des antennes synthétiques interferométriques, telles que par exemple celles décrites dans le brevet US-A-4 400 803 délivrée le 23 août 1983 au nom de Fred N. SPIESS. Dans la réalisation décrite dans ce brevet, on utilise une double antenne synthétique formée à partir de deux antennes physiques superposées. Dans un tel cas, on mesure l'angle de site du plan de visée à partir des signaux des deux antennes physiques identiques superposées et l'on utilise l'angle de site ainsi mesuré pour effectuer l'autofocalisation hybride selon l'invention telle que décrite plus haut.

En conclusion, le sonar d'imagerie du fond selon l'invention décrit dans la présente demande de brevet réalise l'association d'une antenne synthétique avec un dispositif d'autofocalisation par intercorrélation de récurrences, une mesure de rotation de l'antenne entre les différentes récurrences successives utilisées pour la synthèse de l'antenne au moyen d'une centrale inertielle, et une mesure de l'angle de site du signal rétrodiffusé par le fond au moyen d'une antenne réseau auxiliaire ayant une directivité verticale. Cette dernière mesure permet d'obtenir une précision suffisante sur la mesure des rotations pour pouvoir effectuer l'autofocalisation avec une résolution bien meilleure que celle obtenue jusqu'à présent dans les sonars existants.

## Revendications

1. Procédé de correction des effets des mouvements parasites de l'antenne dans un sonar à antenne synthétique, dans lequel on forme une antenne synthétique sur N récurrences du sonar et on corrige les variations du mouvement de l'antenne physique (202) en effectuant une autofocalisation par intercorrélation des récurrences successives, **caractérisé en ce que** pour corriger ces variations on utilise en outre la mesure des rotations de l'antenne obtenue avec au moins un gyromètre, et que l'on mesure l'angle de site du signal de réception avec une antenne auxiliaire (203) perpendiculaire à ladite antenne physique pour augmenter la précision de mesure de la dite rotation à partir des mesures du gyromètre.

2. Procédé selon la revendication 1, **caractérisé en ce que** l'antenne physique (202) est portée par un véhicule sous-marin dont la coque(201) est de section sensiblement circulaire et que l'antenne auxiliaire (203) est courbe pour être conforme à cette coque.

3. Procédé selon la revendication 1, **caractérisé en ce que** l'antenne auxiliaire est réduite à deux transducteurs extrêmes (213,223) et un transducteur intermédiaire (212).

4. Procédé selon la revendication 3, **caractérisé en ce que** le transducteur intermédiaire (212) est l'un des transducteurs de l'antenne physique (202).

5. Procédé selon l'une quelconque des revendications 1 à 4, **caractérisé en ce que** le sonar est du type à antenne synthétique interférométrique utilisant deux antennes physiques superposées et que l'on utilise les signaux reçus par ces deux antennes physiques pour mesurer l'angle de site.

## Patentansprüche

1. Verfahren zur Korrektur von Störbewegungen der Antenne in einem Sonar-Gerät mit künstlicher Antenne, bei dem eine künstliche Antenne über N Wiederholungen des Sonar-Geräts gebildet wird und die Bewegungsänderungen der körperlichen Antenne (202) korrigiert werden, indem eine Autofokusierung durch Interkorrelation der aufeinanderfolgenden Wiederholungen durchgeführt wird, **dadurch gekennzeichnet, daß** zum Korrigieren dieser Änderungen außerdem der mit Hilfe eines Gyrometers erhaltene Meßwert der Drehungen der Antenne benutzt wird und daß der Azimutwinkel des Empfangssignals mit einer Hilfsantenne (203) senkrecht zur körperlichen Antenne gemessen wird, um die Genauigkeit des Meßwerts der Drehung mittels der Meßwerte des Gyrometers zu erhöhen.

2. Verfahren nach Anspruch 1, **dadurch gekennzeichnet, daß** die körperliche Antenne (202) von einem Unterwasserfahrzeug getragen wird, dessen Rumpf (201) einen im wesentlichen kreisförmigen Querschnitt hat, und daß die Hilfsantenne (203) zur Anpassung an diesen Rumpf gekrümmt ist.

3. Verfahren nach Anspruch 1, **dadurch gekennzeichnet, daß** die Hilfsantenne auf zwei Endwandler (213, 223) und einen Zwischenwandler (212) reduziert ist.

4. Verfahren nach Anspruch 3, **dadurch gekennzeichnet, daß** der Zwischenwandler (212) einer der Wandler der körperlichen Antenne (202) ist.

5. Verfahren nach einem der Ansprüche 1 bis 4, **dadurch gekennzeichnet, daß** das Sonar-Gerät vom Typ mit interferometrischer künstlicher Antenne ist, bei dem von zwei übereinander angeordneten körperlichen Antennen Gebrauch gemacht wird, und daß die von diesen zwei körperlichen Antennen empfangenen Signale zum Messen des Azimutwinkels benutzt werden.

**Claims**

1. Process for correcting the effects of the spurious motions of the antenna in a synthetic antenna sonar, in which a synthetic antenna is formed over N recurrences of the sonar and the variations in the motion of the physical antenna (202) are corrected by performing an autofocussing by crosscorrelation of the successive recurrences, **characterized in that** in order to correct these variations, use is made moreover of the measurement of the rotations of the antenna obtained with at least one rate gyro, and that the angle of elevation of the reception signal is measured with an auxiliary antenna (203) perpendicular to the said physical antenna so as to increase the precision of measurement of the said rotation on the basis of the rate gyro measurements.

2. Process according to Claim 1, **characterized in that** the physical antenna (202) is carried by an underwater vehicle whose hull (201) is of substantially circular section and **in that** the auxiliary antenna (203) is curved so as to match the shape of this hull.

3. Process according to Claim 1, **characterized in that** the auxiliary antenna is reduced to two extreme transducers (213, 223) and one intermediate transducer (212).

4. Process according to Claim 3, **characterized in that** the intermediate transducer (212) is one of the transducers of the physical antenna (202).

5. Process according to any one of Claims 1 to 4, **characterized in that** the sonar is of the type with interferometric synthetic antenna using two superposed physical antennas and **in that** the signals received by these two physical antennas are used to measure the angle of elevation.

FIG.1

EP 1 019 747 B1

FIG.2

FIG.3